# EUROPÄISCHE PATENTANMELDUNG

(11) **EP 0 645 547 A1**
(43) Veröffentlichungstag der Anmeldung: **29.03.1995**
(21) Anmeldenummer: 94114105.3
(22) Anmeldetag: 08.09.1994
(51) Int. Cl.: F16B 37/04

(54) **Schraubverbindung**

(30) Priorität: 29.09.1993 DE 9314824 U
(71) Anmelder: TRW United-Carr GmbH & Co. KG, D-67677 Enkenbach-Alsenborn (DE)
(72) Erfinder: Bockenheimer, Alexander, D-67307 Göllheim (DE)
(74) Vertreter: Schieschke, Klaus, Dipl.-Ing.

(57) **Zusammenfassung**

Die Erfindung bezieht sich auf eine Schraubverbindung zwischen zwei plattenförmigen Elementen, insbesondere einer Kunststoff- und einer Blechplatte, mit einem in eine koaxiale Öffnung beider Platten einsetzbaren Kunststoffdübel 1. Der Schaft 3 des Kunststoffdübels 1 besteht aus einer zylindrischen Zone 10 und einer daran anschließenden Kegelstumpfzone 11 mit abgeschlossenem unteren Ende 12 und weist zumindest über eine bestimmte Länge einen Bereich B₁ geringer Wandstärke W auf. An den Bereich B₁ geringer Wandstärke schließt sich ein Bereich B₂ kleineren Durchmessers einer Ausnehmung 4 an, welcher mit Eingriffselementen 13 für Gewindegänge des Schraubenschaftes versehen ist.

## Beschreibung

Die Erfindung bezieht sich auf eine Schraubverbindung zwischen zwei plattenförmigen Elementen nach dem Oberbegriff des Anspruchs 1.

Als Stand der Technik ist hierbei bereits eine Ausführungsform bekannt (DE-GM 83 24 075.6), bei welcher der Kopf zwischen den beiden plattenförmigen Elementen eingespannt ist. Dieser Kopf ist mit entsprechenden Dichtlippen versehen, um eine Dichtwirkung zu erzielen. Weiterhin weist die durchgehend offene Ausnehmung gleichfalls eine umlaufende Dichtlippe auf, welche in Zusammenwirken mit den Gewindegängen des Schraubenschaftes zu einer Abdichtung im Inneren führt. Der Außenumfang ist mit einer Anzahl von Trennuten versehen, zwischen welchen Spreizteile angeordnet sind. Diese bekannte Ausführung ist nur dann anwendbar, wenn der Kopf zwischen zwei Plattenteilen eingespannt werden kann.

Weiterer Stand der Technik beschreibt Haltedübel bzw. Spreizmuttern, welche jeweils auf ganz spezielle Anwendungsgebiete abgestellt sind oder einen konstruktiven aufwendigen Aufbau aufweisen (DE-AS 1 006 733, GB-PS 2 424 757, GB-PS 1 309 233, US-PS 3 756 116, GB-PS 1 359 455, DE-OS 2 537 368, DE-OS 29 29 461).

Demgegenüber besteht die Aufgabe der vorliegenden Erfindung darin, eine Schraubverbindung der eingangs genannten Art zu schaffen, welche bei einfachem Aufbau eine sehr gute Abdichtung der Öffnungen der beiden aneinanderliegenden plattenförmigen Elemente gewährleistet, welche gleichzeitig sicher miteinander befestigt werden sollen.

Diese Aufgabe wird erfindungsgemäß mit den Merkmalen im kennzeichnenden Teil des Anspruchs 1 gelöst. Es ergibt sich hierdurch der Vorteil einer Schraubverbindung zwischen zwei plattenförmigen Elementen, insbesondere einer Kunststoff- und einer Blechplatte, bei welcher infolge der geringen Wandstärke in einem bestimmten zylindrischen Bereich eine Schwachstelle vorliegt, welche sich unter Einwirkung der Schraube zusammenfaltet und neben einer guten Haltekraft gleichzeitig eine sichere Abdichtung gewährleistet.

Vorteilhafte Weiterbildungen ergeben sich aus den Unteransprüchen.

Die Erfindung wird nachfolgend anhand von in der Zeichnung dargestellten Ausführungsbeispielen näher beschrieben. In der Zeichnung zeigen:
- Fig. 1: eine Seitenansicht der erfindungsgemäßen Schraubverbindung;
- Fig. 2: eine perspektivische Ansicht der Schraubverbindung nach Fig. 1;
- Fig. 3: eine Draufsicht auf die Schraubverbindung nach Fig. 1;
- Fig. 4: die in Fig. 1 bis 3 dargestellte Schraubverbindung mit eingesetztem Schraubenschaft vor dessen Anziehen;
- Fig. 5: eine andere Ausführungsmöglichkeit der Schraubverbindung in Seitenansicht;
- Fig. 6: die Ausführungsform nach Fig. 5 in perspektivischer Ansicht;
- Fig. 7: eine Draufsicht auf die Ausführungsform nach Fig. 5 und 6;
- Fig. 8: die Schraubverbindung nach Fig. 5 mit eingesetztem Schraubenschaft vor Aufbringen der plattenförmigen Elemente.

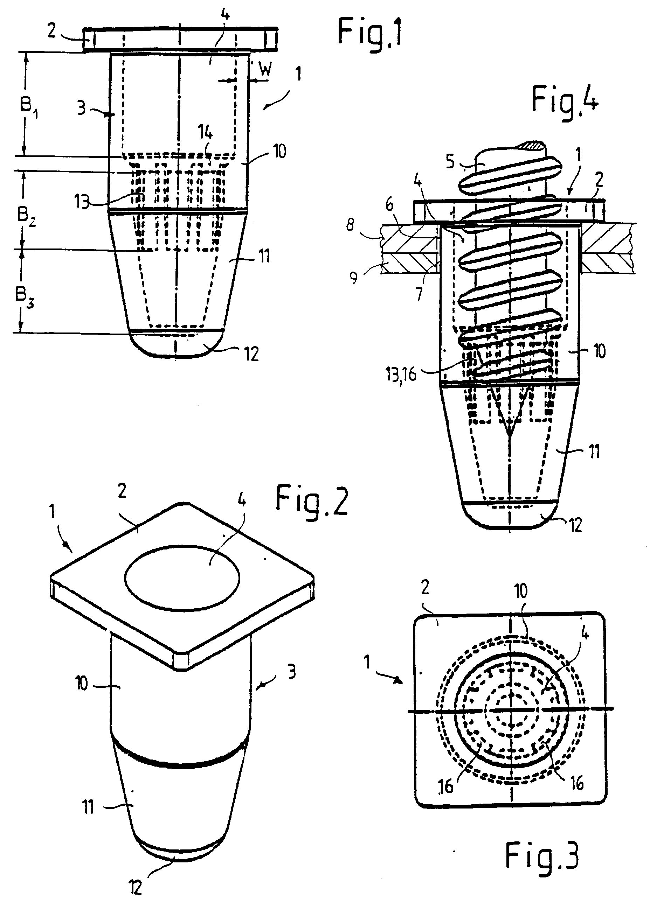

In Fig. 1 ist eine Schraubverbindung 1 dargestellt, welche zur Verbindung zweier aneinanderliegender plattenförmiger Elemente 8 und 9 gemäß Fig. 4 mit Hilfe eines Schraubenschaftes 5 einer nicht näher bezeichneten Schraube dient.

Die Schraubverbindung 1 weist einen Kopfbereich 2 auf, welcher beispielsweise gemäß Fig. 2 und 3 rechteckig, insbesondere quadratisch, ausgebildet sein kann. An diesem Kopf 2 schließt sich ein Schaft 3 an.

Der Schaft 3 besteht gemäß Fig. 1 und 2 aus einer zylindrischen Zone 10 und einer daran anschließenden Kegelstumpfzone 11 mit abgeschlossenem unteren Ende 12. Aus Fig. 1 geht hervor, daß der Schaft 3 zumindest über eine bestimmte Länge einen Bereich B₁ geringer Wandstärke W im Hinblick auf eine zentrische Ausnehmung 4 aufweist, welche zur Aufnahme des Schraubenschaftes 5 dient und als Sackloch ausgebildet ist.

An den Bereich B₁ geringer Wandstärke W schließt sich über eine konische Übergangszone 14 gemäß Fig. 1 ein Bereich B₂ kleineren Durchmessers der Ausnehmung 4 an. Wie ersichtlich, weist dieser Bereich B₂ am Umfang der Ausnehmung 4 angeordnete Eingriffselemente 13 für Gewindegänge des Schraubenschaftes 5 auf. Diese Eingriffselemente 13 können als sich in Längsrichtung erstreckende Stege 16 ausgebildet sein.

Aus Fig. 3 geht hierbei hervor, daß sich mehrere Stege 16 gleichmäßig über den Innenumfang des Bereichs B₂ kleineren Durchmessers erstrecken.

Aus Fig. 1 ist ersichtlich, daß sich der mit den Eingriffselementen 13, d.h. den Stegen 16 versehene Bereich B₂ kleineren Durchmessers von der zylindrischen Zone 10 bis in die anschließende Kegelstumpfzone 11 erstreckt. Hierbei durchdringt der Bereich B₁ sowohl den Kopf 2 als auch einen Teil der zylindrischen Zone 10 des Schaftes 3 und verläuft bis nahezu über die Hälfte der Länge dieser zylindrischen Zone 10.

Aus Fig. 1 geht weiter hervor, daß der mit den Stegen 16 versehene Bereich B₂ im Bereich der zylindrischen Zone 10 zylindrisch und im Bereich der Kegelstumpfzone 11 kegelstumpfartig ausgebildet ist. Der Bereich B₁ und/oder der konische Abschlußbereich B₃ der Ausnehmung 4 weisen jeweils eine glatte Innenwandung auf.

Außerdem ist aus Fig. 1 erkennbar, daß der Bereich B₂ und der konische Abschlußbereich B₃ jeweils gleiche Wandstärke besitzen.

Die Montage der Schraubverbindung 1 zum Zusammenfügen der in Fig. 4 schematisch dargestellten plattenförmigen Elemente 8 und 9, insbesondere einer Blechplatte und einer Kunststoffplatte, wird wie folgt durchgeführt: Beide Platten weisen jeweils eine koaxial anzuordnende Öffnung 6, 7 auf. In diese koaxialen Öffnungen 6, 7 wird die Schraubverbindung 1 eingesetzt. Nunmehr wird eine Schraube mit dem Schraubenschaft 5 in die zentrische Ausnehmung 4 der Schraubverbindung 1 eingeführt, wobei der Schraubenschaft in die Stege 16 eingreift, welche sich im Bereich B₂ befinden.

Beim Anziehen der Schraube wird ein Anzugsmoment erzielt. Durch das Anziehen und infolge der geringen Wandstärke W im Bereich W₁ kommt nunmehr die dort vorliegende Schwachstelle zur Geltung und wird gefaltet. Hieraus ergibt sich einerseits eine Haltekraft im Bereich der Öffnungen 6, 7, wobei außerdem auf einfache Weise eine sehr gute Abdichtung der koaxialen Öffnungen 6, 7 der beiden Platten 8 und 9 geschaffen wird.

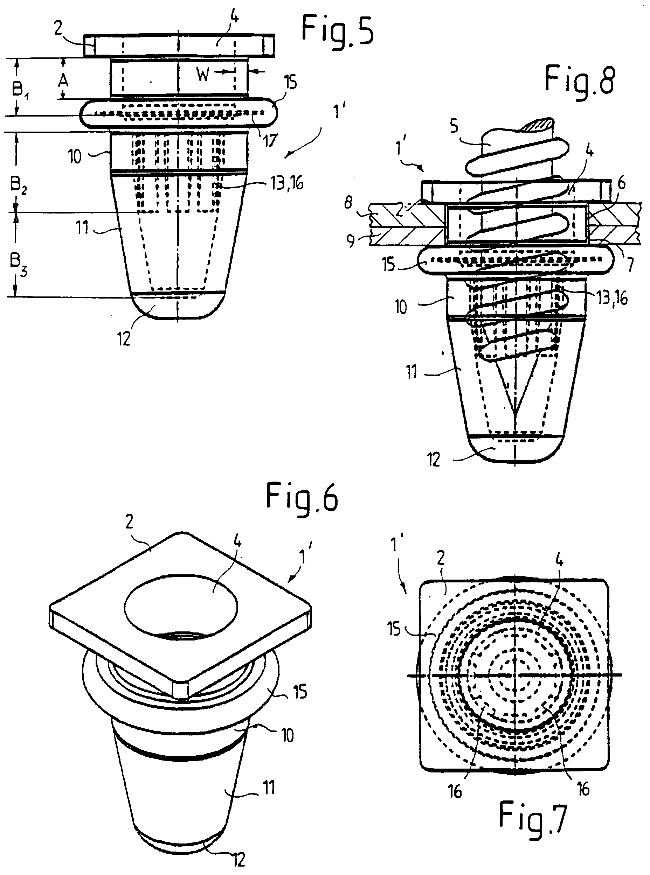

Bei dem Ausführungsbeispiel nach Fig. 5 bis 8 liegt eine Schraubverbindung 1' vor, welche wiederum aus einem Kopf 2 und einem Schaft 3 besteht. Gleichfalls sind die Bereiche B₁, B₂ und B₃ analog der Ausführungsform nach Fig. 1 vorgesehen.

Unterschiede zu der Ausführungsform nach Fig. 1 bis 4 bestehen insofern, als in der zylindrischen Zone 10 an deren Außenumfang eine umlaufende Wulst 15 angeordnet ist. Diese umlaufende Wulst liegt in einem Abstand A vom Kopf 2 nach Fig. 5.

In diesem Bereich können nun plattenförmige Elemente analog der Ausführungsform nach Fig. 4 eingesetzt werden, deren Öffnungen koaxial anzuordnen sind. Durch die Wulst 5 und die Schwachstelle im Bereich B1 der zylindrischen Zone wird wiederum beim Anziehen über einen Schraubenschaft 5 neben einer guten Haltewirkung eine einwandfreie Abdichtung geschaffen.

Erfindungsgemäß besteht darüber hinaus die Möglichkeit, daß die umlaufende Wulst 15 im Inneren eine quer verlaufende Ausnehmung 17 aufweist, welche die Flexibilität dieser Wulst erhöht und beim Anziehen des Schraubenschaftes 5 zusammengepreßt wird, so daß nicht nur eine Dichtwirkung im Inneren, sondern auch außerhalb der Öffnungen 6, 7 an der Unterseite der Platte 9 hergestellt wird.

Beiden Ausführungsformen der erfindungsgemäßen Schraubverbindung 1 bzw. 1' ist gemeinsam, daß eine einfach aufgebaute Form vorliegt, welche eine gute und sichere Verbindung zwischen zwei plattenförmigen Elementen mit einwandfreier Abdichtung schafft.

## Patentansprüche

1. Schraubverbindung zwischen zwei plattenförmigen Elementen, insbesondere einer Kunststoff- und einer Blechplatte, mit einem in eine koaxiale Öffnung beider Platten einsetzbaren Kunststoffdübel, welcher eine zentrische Ausnehmung zur Aufnahme eines Schraubenschaftes aufweist, wobei nach Einlagerung des Schraubenschaftes in die Ausnehmung des Kunststoffdübels dessen Schaft zumindest teilweise gespreizt und die koaxiale Öffnung über dem Kunststoffdübel abgedichtet ist,
dadurch gekennzeichnet,
daß der Schaft (3) des Kunststoffdübels (1) aus einer zylindrischen Zone (10) und einer daran anschließenden Kegelstumpfzone (11) mit abgeschlossenem unteren Ende (12) besteht,
daß der Schaft (3) zumindest über eine bestimmte Länge einen Bereich (B₁) geringer Wandstärke (W) im Hinblick auf die zentrische Ausnehmung (4) aufweist und
daß an den Bereich (B₁) geringer Wandstärke ein Bereich (B₂) kleineren Durchmessers der Ausnehmung (4) anschließt, welcher mit am Umfang der Ausnehmung (4) angeordneten Eingriffselementen (13) für Gewindegänge des Schraubenschaftes versehen ist und in einen konischen Abschlußbereich (B₃) der Ausnehmung (4) übergeht.

2. Schraubverbindung nach Anspruch 1,
dadurch gekennzeichnet,
daß sich zwischen dem Bereich (B₁) geringer Wandstärke und dem Bereich (B₂) kleineren Durchmessers eine konische Übergangszone (14) befindet.

3. Schraubverbindung nach Anspruch 1 oder 2,
dadurch gekennzeichnet,
daß sich der Bereich (B₁) geringer Wandstärke durch den Kopf (2) bis über die Hälfte der Länge der zylindrischen Zone (10) des Schaftes (3) erstreckt.

4. Schraubverbindung nach Anspruch 1, 2 oder 3,
dadurch gekennzeichnet,
daß sich der mit den Eingriffselementen (13) versehene Bereich (B₂) kleineren Durchmessers von der zylindrischen Zone (10) bis in die anschließende Kegelstumpfzone (11) erstreckt.

5. Schraubverbindung nach Anspruch 4,
dadurch gekennzeichnet,
daß der mit den Eingriffselementen (13) versehene Bereich (B₂) im Bereich der zylindrischen Zone (10) zylindrisch und im Bereich der Kegelstumpfzone (11) kegelstumpfartig ausgebildet ist.

6. Schraubverbindung nach einem der vorhergehenden Ansprüche,
dadurch gekennzeichnet,
daß in der zylindrischen Zone (10) an deren Außenumfang im Abstand vom Kopf (2) ein umlaufender Wulst (15) angeordnet ist.

7. Schraubverbindung nach einem der vorhergehenden Ansprüche,
dadurch gekennzeichnet,
daß der Kopf (2) rechteckig (insbesondere quadratisch) ausgebildet ist.

8. Schraubverbindung nach Anspruch 6 oder 7,
dadurch gekennzeichnet,
daß der Außendurchmesser der Wulst (15) etwa der Breite des Kopfes (2) entspricht.

9. Schraubverbindung nach einem der vorhergehenden Ansprüche,
dadurch gekennzeichnet,
daß die Eingriffselemente (13) für die Gewindegänge des Schraubenschaftes (5) als sich in Längsrichtung erstreckende Stege (16) ausgebildet sind.

10. Schraubverbindung nach Anspruch 9,
dadurch gekennzeichnet,
daß sich mehrere Stege (16) gleichmäßig über den Innenumfang des Bereichs (B₂) kleineren Durchmessers erstrecken.

11. Schraubverbindung nach einem der vorhergehenden Ansprüche,
dadurch gekennzeichnet,
daß der Bereich (B₁) geringer Wandstärke und/oder der konische Abschlußbereich (B₃) der Ausnehmung (4) jeweils eine glatte Innenwandung aufweisen.

12. Schraubverbindung nach einem der vorhergehenden Ansprüche,
dadurch gekennzeichnet,
daß der Bereich (B₂) kleineren Durchmessers und der konische Abschlußbereich (B₃) jeweils gleiche Wandstärke aufweisen.

13. Schraubverbindung nach Anspruch 6 oder 8,
dadurch gekennzeichnet,
daß die Wulst (15) im Inneren eine querverlaufende Ausnehmung (17) aufweist.
